# EUROPEAN PATENT APPLICATION

(11) **EP 4 746 095 A1**
(43) Date of publication of application: **20.05.2026**
(21) Application number: 25768687.3
(22) Date of filing: 04.03.2025
(51) Int. Cl.: H01M 10/052, H01M 10/0562, H01M 10/42, H01M 50/417, H01M 4/58, H01M 4/525, H01M 4/505, H01M 4/38, H01M 4/02

(54) **LITHIUM SECONDARY BATTERY COMPRISING BUFFER LAYER BETWEEN POSITIVE ELECTRODE AND SEPARATOR**

(30) Priority: 04.03.2024 KR 20240030959; 28.02.2025 KR 20250027002
(71) Applicant: LG Energy Solution, Ltd., Seoul 07335 (KR)
(72) Inventor: CHOI, Jeongin, Daejeon 34122 (KR); KIM, Soohyun, Daejeon 34122 (KR); KIM, Da Young, Daejeon 34122 (KR)
(74) Representative: Hoffmann Eitle
(86) International application number: PCT/KR2025/099517
(87) International publication number: WO 2025/188132

(57) **Abstract**

According to certain embodiments of the present disclosure, there is provided a lithium secondary battery comprising:
an electrode assembly including a positive electrode, a negative electrode, and a separator, and
an electrolyte including a lithium salt, a non-aqueous organic solvent, and a fluorinated nonsolvent.
wherein the positive electrode and the negative electrode face each other with the separator between them, and
wherein a buffer layer including an oxide-based solid electrolyte and a protective layer including a reactive material formed by a reaction of the oxide-based solid electrolyte with the fluorinated nonsolvent are formed between the positive electrode and the separator.

## Description

### [TECHNICAL FIELD]

### Cross-Reference to Related Application(s)

This application claims priority to and the benefit of Korean Patent Application no. KR10-2024-0030959, filed on March 4, 2024, and Korean Patent Application no. KR10-2025-0027002, filed on February 28, 2025, with the Korean Intellection Property Office, the contents of which are incorporated herein by reference in their entirety.

The present disclosure relates to a lithium secondary battery comprising a buffer layer between a positive electrode and a separator.

### [BACKGROUND ART]

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibit high energy density and operating potential, have a long cycle life, and a low self-discharge rate, and has been commercialized and widely used.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, numerous studies have been actively made to use a lithium secondary battery having a high energy density and a high discharge voltage, a part of which are in the commercializing stage.

A lithium secondary battery generally has a structure in which a non-aqueous electrolytic solution is impregnated into an electrode assembly including a positive electrode, a negative electrode and a porous separator. In general, the positive electrode is prepared by coating a positive electrode mixture including a positive electrode active material onto an aluminum foil, and the negative electrode is prepared by coating a negative electrode mixture including a negative electrode active material onto a copper foil.

Usually, the positive electrode active material is a lithium transition metal oxide, and the negative electrode active material is a carbon-based material.

However, as such liquid electrolyte-based lithium secondary batteries are subjected to repeated charge/discharge cycles, by-products are formed at the interface of a positive electrode due to the continuous decomposition of the electrolyte, and such by-products lowers the output of the electrode, which causes a decrease in capacity.

In addition, the decrease in capacity is directly related to the overall capacity of the cells, may occur fatally when the positive electrode interfaces are deteriorated, and may be caused by an increase in the cell resistance and overvoltage due to the by-products formed at the positive electrode interfaces.

Therefore, in order to continuously realize a capacity of a lithium secondary battery and improve a lifetime thereof, there is a need to improve the interfacial stability between the positive electrode and the electrolytic solution.

### [DETAILED DESCRIPTION OF THE INVENTION]

### [Technical Problem]

Therefore, it is an object of the present disclosure to provide a lithium secondary battery that suppresses formation of electrode byproducts due to the stabilization of the positive electrode interfaces while improving the physical properties of the separator, thereby capable of continuously realizing a capacity and improving a lifetime

### [Technical Solution]

According to certain aspects of the present disclosure, there is provided a lithium secondary battery comprising:
an electrode assembly including a positive electrode, a negative electrode, and a separator, and
an electrolyte including a lithium salt, a non-aqueous organic solvent, and a fluorinated nonsolvent.
wherein the positive electrode and the negative electrode face each other with the separator between them, and
wherein a buffer layer including an oxide-based solid electrolyte and a protective layer including a reactive material formed by a reaction of the oxide-based solid electrolyte with the fluorinated nonsolvent are formed between the positive electrode and the separator.
Wherein, the oxide-based solid electrolyte comprises LATP represented by the following Formula 1:

   [Formula 1] Li₁₊ₓAlₓTi₂₋ₓ(PO₄)₃
wherein, in Formula 1, 0 < x <0.5.

More specifically, the oxide-based solid electrolyte may comprise Li_{1.3}Al_{0.3}Ti_{1.7}(PO₄)₃ (LATP).

In addition, the buffer layer may further comprise a binder.

A thickness of the buffer layer may be 0.1µm to 10µm.

A total ionic conductivity of the separator and the buffer layer may be 0.5 mS/cm to 5 mS/cm.

Meanwhile, the protective layer may be formed between the buffer layer and the positive electrode.

Specifically, the protective layer may have a gradient in which the concentration of the material resulting from the oxide-based solid electrolyte in the reactive material decreases as it goes from the buffer layer to the positive electrode on the basis of the thickness direction.

A thickness of the protective layer may be 0.01µm to 1µm.

Furthermore, the protective layer may contain 70% by weight to 90% by weight of F element.

Meanwhile, the lithium salt of the electrolyte may be at least one imide-based lithium salt selected from the group consisting of LiFSI (Lithium bis(fluorosulfonyl) imide), LiN(SO₂F)₂), LiBETI (lithium bis(perfluoroethanesulfonyl) imide), LiN(SO₂CF₂CF₃)₂ and LiTFSI (lithium bis(trifluoromethanesulfonyl) imide), LiN(SO₂CF₃)₂).

Furthermore, the fluorinated nonsolvent may be at least one selected from the group consisting of TFEE (Ethylene glycol bis(1,1,2,2-tetrafluoroethyl) ether), TTE (1,1,2,2-tetrafluoroethyl-2,2,3,3-tetrafluoropropyl ether), DFB (1,2-difluorobenzene), BTFE (bis(2,2,2-trifluoroethyl) ether), OTE (1H,1H,5H-Octafluoropentyl 1,1,2,2-tetrafluoroethyl ether), and 1,1,2,2-tetrafluoroethyl 2,2,2-trifluoroethyl ether.

The non-aqueous organic solvent may contain an ether-based organic solvent in an amount of 50 volume% or more based on the total volume of the non-aqueous organic solvent.

The positive electrode may comprise a lithium iron phosphate represented by the following Formula 2 or a lithium transition metal oxide represented by the following Formula 3 as a positive electrode active material.

[Formula 2] Li₁₊ₐFe_{1-y}M_{y}(PO_{4-b})X_{b}

wherein, in Formula 2, M is at least one selected form the group consisting of Al, Mg and Ti, -0.5≤a≤0.5, 0≤y≤0.5, and 0≤b≤0.1,

   [Formula 3] Li_{1+a'}Ni_{1-y'-z'-s}Co_{y'}Mn_{z'}M'ₛO_{2-b'}X_{b'}
wherein, in Formula 3, M' is at least one selected form the group consisting of Al, Fe, V, Cr, Ti, Ta, Mg and Mo, -0.5≤a'≤0.5, 0<y'<1, 0<z'<1, 0≤s<0.2, and 0≤b'≤0.1,
wherein, in Formulas 2 and 3, X is at least one selected form the group consisting of F, S and N.

Furthermore, the negative electrode may comprise a lithium metal as a negative electrode active material.

In addition, the separator may be a polyolefin-based substrate.

### [BRIEF DESCRIPTION OF THE DRAWINGS]

FIG. 1 is a cross-sectional schematic diagram of a lithium secondary battery according to certain embodiments of the present disclosure.
FIG. 2 is a cross-sectional SEM photograph of a positive electrode after a cycle of Example 1 according to Experimental Example 1.
FIG. 3 is a cross-section and elemental analysis photograph of a positive electrode after a cycle of Example 1 according to Experimental Example 1.
FIG. 4 is a graph comparing lifetime properties according to Experimental Example 2.
FIG. 5 is a graph comparing lifetime properties according to Experimental Example 3.

### [DETAILED DESCRIPTION OF THE EMBODIMENTS]

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

Meanwhile, the terms "consists of" and/or "consisting of' as used herein mean that in addition to the recited components, other components are not contained more than impurity levels, i.e., trace amounts.

In the present disclosure, the "average particle size D50" means a particle size at which cumulative volumes of powder particles (e.g., positive electrode active material, negative electrode active material, etc.) reach 50% in the particle size distribution curve of the particles. The average particle size D50 can be measured using a laser diffraction method. For example, the D50 can be measured by a process which includes dispersing the powder of particles to be measured in a dispersion medium, introducing it into a commercially available laser diffraction particle size measurement device (e.g., Microtrac MT 3000), irradiating it with ultrasound of about 28 kHz with the output power of 60W to obtain a volume cumulative particle size distribution graph, and then determining the particle size corresponding to 50% of cumulative volume.

In the present disclosure, the ionic conductivity is a value obtained as follows: an electrochemical impedance is measured under the amplitude of 10 mV and the scan range of 500 KHz to 20 MHz at 60°C using an analyzer (VMP3, BioLogic Science Instruments), and then a calculation is made based on the measurements.

In the present disclosure, the "elemental analysis" means that when performing photographing under a back scattered electron image mode in which bright and dark in an image appear differently based on the weight difference of particles, it is possible to distinguish materials from bright and dark areas in images, and the content of elements can be analyzed using a map spectrum (EDS analysis method).

In the present disclosure, the "porosity" can be determined by measuring 2500× photographs of the surface of the sample using a field emission-scanning electron microscope (FE-SEM) (Hitachi S-4800 Scanning Electron Microscope), and then estimating the volume from the area of surface pores confirmed in a randomly sampled range (10 um or more in width and 15 um or more in height) within the measured photograph.

A lithium secondary battery according to certain embodiments of the present disclosure comprises: an electrode assembly including a positive electrode, a negative electrode, and a separator, and
an electrolyte including a lithium salt, a non-aqueous organic solvent, and a fluorinated nonsolvent.
wherein the positive electrode and the negative electrode face each other with the separator between them, and
wherein a buffer layer including an oxide-based solid electrolyte and a protective layer including a reactive material formed by a reaction of the oxide-based solid electrolyte with the fluorinated nonsolvent are formed between the positive electrode and the separator.

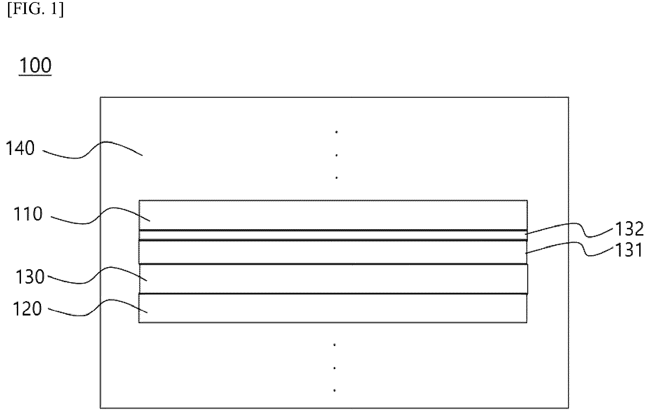

In this case, in order to explain the structure of the lithium secondary battery, a cross-sectional schematic diagram of the lithium secondary battery according to the present disclosure is illustrated in FIG. 1 below.

Referring to FIG. 1, the lithium secondary battery 100 includes an electrode assembly including a positive electrode 110, a negative electrode 120, and a separator 130, and an electrolyte 140 including a lithium salt, a non-aqueous organic solvent, and a fluorinated nonsolvent.

In this case, the positive electrode 110 and the negative electrode 120 face each other with the separator 130 between them, and a buffer layer 131 including an oxide-based solid electrolyte and a protective layer 132 including a reactive material formed by a reaction of the oxide-based solid electrolyte with the fluorinated nonsolvent are formed between the positive electrode 110 and the separator 130.

Here, the protective layer 132 is located between the positive electrode 110 and the buffer layer 131.

Therefore, respective constituent elements will be described in more detail below.

### Separator

The separator is interposed between the positive electrode and the negative electrode, separates the positive electrode and the negative electrode and provides a migration passage for lithium ions, and those normally used as a separator in a lithium secondary battery may be used without any particular limitation, and in particular, those having an excellent electrolyte impregnation ability while having low resistance to ion migration of the electrolyte are preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, an ethylene/methacrylate copolymer or the like or a stacked structure having two or more layers thereof, may be used. In addition, a common porous non-woven fabric, for example, a non-woven fabric made of high-melting-point glass fiber, polyethylene terephthalate fiber or the like may be used.

### Buffer layer

The buffer layer may be formed between the positive electrode and the separator.

In this case, the buffer layer may be formed separately, or may be formed on the positive electrode, or may be formed on the separator. However, more specifically, it may be formed on the separator for the purposes of ease of production, reduction of side reactions, improvement of the physical properties of the separator, and the like.

Specifically, it can be produced by coating a slurry containing the oxide-based solid electrolyte on the positive electrode or the separator and drying the slurry.

Here, the oxide-based solid electrolyte included in the buffer layer is not limited, and may further include at least one lithium metal oxide or lithium metal phosphate selected from Nasicon-type solid electrolyte, Lisicon-type solid electrolyte, Garnet-type solid electrolyte, Perovskite-type solid electrolyte, and LiPON-type solid electrolyte. More specific examples thereof may include at least one selected from the group consisting of LATP (lithium aluminum titanium phosphate)-based compound, LAGP (lithium aluminum germanium phosphate)-based compound, LLZO (lithium lanthanum zirconium oxide)-based compound, LLZTO (lithium lanthanum zirconium tantalum oxide)-based compound, LLTO (lithium lanthanum titanium oxide)-based compound, LSTP (lithium silicon titanium phosphate)-based compound, and LGPO(lithium germanium phosphate)-based compound. However, specifically, it may include LATP represented by the following Formula 1, and more specifically, may include Li_{1.3}Al_{0.3}Ti_{1.7}(PO₄)₃ (LATP).

[Formula 1] Li₁₊ₓAlₓTi₂₋ₓ(PO₄)₃

wherein, in Formula 1, 0<x<0.5.

Specifically, the LATP may be contained in an amount of 80% by weight to 100% by weight, more specifically 90% by weight to 100% by weight, based on the total weight of the oxide-based solid electrolyte.

Since the oxide-based solid electrolyte has excellent atmospheric stability against the infiltration of peripheral oxygen and moisture, it can expect the effect of suppressing formation of by-products at the positive electrode interface. Among the corresponding materials, the LATP has relatively excellent ion conductivity, and thus is effective in realizing the present disclosure.

The average diameter (D50) of the oxide-based solid electrolyte particles may be 50 nanometers to 10 micrometers, specifically 50 nanometers to 5 micrometers, and more specifically 50 nanometers to 1 micrometer.

If the average diameter is too small out of the above range, aggregation between particles may occur due to the reduction of dispersibility, and on the contrary, if the average diameter is too large, large pores are formed by the oxide-based solid electrolyte, which is rather not good in terms of resistance. That is, if the above range is satisfied, it is possible to enhance the lithium ion conductivity, reduce the resistance, and exhibit improved lithium secondary battery performance.

In addition, the buffer layer may further include a binder for binding the oxide-based solid electrolyte in order to form a rigid layer when the oxide-based solid electrolyte is coated and dried on the separator.

Here, the binder is not limited unless the binder causes a side reaction with an electrolytic solution. In particular, however the binder used may be the one of which a glass transition temperature (Tg) is as low as possible, preferably in a range of -200 to 200°C.

Further, the binder does not need to have ionic conduction capacity, but it is more preferable to use the polymer having the ionic conduction capacity.

Thus, it is preferable that the binder has a high dielectric constant. Indeed, a degree of dissociation of salt in an electrolyte depends on the dielectric constant of an electrolytic solvent. As the dielectric constant of the polymer increases, the degree of dissociation of salt in the electrolyte may be improved. The dielectric constant of the polymer used may be 1 or more, particularly in a range of 1.0 to 100 (measurement frequency=1 kHz), and particularly preferably 10 or more.

In addition to the functions described above, the binder may have a feature of being gelled to show a high degree of impregnation with an electrolytic solution, when being impregnated into the liquid electrolyte. Indeed, if the binder is a polymer having an excellent degree of impregnation with an electrolytic solution, the electrolytic solution injected after assembling of a battery permeates the polymer, and the polymer retaining the absorbed electrolytic solution comes to have an ion conduction capacity for the electrolyte. Thus, if possible, a solubility index of the polymer is preferably in a range of 15 to 45 MPₐ^{1/2}, more preferably in a range of 15 to 25 MPa^{1/2} and 30 to 45 MPa^{1/2}. If the solubility index is less than 15 MPa^{1/2} and more than 45 MPa^{1/2}, it becomes difficult to have impregnation with the liquid electrolyte for a conventional battery.

Examples of such binder may be at least one selected from the group consisting of polyvinylidene fluoride-co-hexafluoropropylene, polyvinylidene fluoride-co-trichloroethylene, polyacrylate, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, and polyvinyl alcohol.

In this case, based on the total weight of the buffer layer, the oxide-based solid electrolyte may be included in an amount of 70% by weight to 99% by weight, specifically 80% by weight to 99% by weight, and the binder may be included in an amount of 1% by weight to 30% by weight, specifically 1% by weight to 20% by weight.

If the content of the oxide-based solid electrolyte is too low out of the above range, sufficient reduction products intended by the present disclosure cannot be obtained, and if the content is too high, the content of the binder connecting them is too low, so that the adhesive force between these particles may become weaker and the mechanical properties may deteriorate, which is not preferable.

The buffer layer including the oxide-based solid electrolyte is formed between the positive electrode and the separator. In other words, after the buffer layer is formed on the separator, the electrode assembly can be assembled so that the buffer layer faces the positive electrode. In the case where the buffer layer is formed on the positive electrode, the electrode assembly can be assembled by forming the buffer layer on the positive electrode and then laminating it with the negative electrode with the separator between them.

This is to prevent the problem of side reactions occurring at the positive electrode interfaces due to a reaction between the positive electrode and the electrolyte, and therefore can act as a side reaction prevention layer. In addition, when the oxide-based solid electrolyte is in direct contact with the negative electrode, especially in the case of a lithium metal negative electrode, it may react with lithium and cause damage to the negative electrode, which may rather deteriorate the cell performance of the lithium secondary battery, and therefore, it should be formed only in the direction facing the positive electrode.

The thickness of the buffer layer may be 0.1µm to 10µm, and specifically, it is preferably 0.5µm or more, 1µm or more, 2µm or more, and more preferably 8µm or less, 6µm or less, 5µm or less, or 4µm or less.

If the thickness is too thin out of the above range, not only the effect due to the formation of the buffer layer cannot be sufficiently obtained, but also the function of preventing the separator from shrinking cannot be performed, which results in a reduction of the safety, and if the thickness is too thick, resistance may rather increase, which is not preferable.

Furthermore, the total ionic conductivity of the separator on which the buffer layer is formed, i.e., the total ionic conductivity of the separator and the buffer layer, can be measured using electrochemical impedance spectroscopy as is known to those skilled in the art, and the ionic conductivity may be 0.1 mS/cm to 5 mS/cm. Specifically, it may be 0.5 mS/cm or more, 0.7 mS/cm or more, or 1 mS/cm or more, and 4 mS/cm or less.

If the total ion conductivity of the separator and the buffer layer is too low out of the above range, the resistance of the lithium secondary battery may rather increase and thus the battery performance may deteriorate. In the case of including the oxide-based solid electrolyte, it is possible to have the ion conductivity within the same range as above.

The porosity of the buffer layer may be 20 volume% to 70 volume%, specifically 30 volume% to 70 volume%, and more specifically 40 volume% to 60 volume%, based on the total volume of the buffer layer.

If the porosity is too large out of the above range, the effect of protecting the positive electrode interface is reduced, and if the porosity is too small, the buffer layer is not sufficiently impregnated with the electrolyte and thus the mobility of lithium ions may deteriorate, which is not preferable.

### Protective layer

As shown in FIG. 1 below and as described above, the protective layer is formed between the buffer layer and the positive electrode.

This protective layer is not formed through separate manufacturing process, but is a layer formed by the activation of a specific electrolyte and the oxide-based solid electrolyte, i.e., by a reaction at the initial stage of a cycle, as described below.

More specifically, as described below, the protective layer is formed by a reaction between a specific material contained in the electrolyte, specifically a fluorinated nonsolvent, and the oxide-based solid electrolyte, and includes such a reactive material.

Therefore, the protective layer may have a gradient in which the concentration of the material resulting from the oxide-based solid electrolyte in the reactive material decreases as it goes from the buffer layer to the positive electrode on the basis of the thickness direction.

This protective layer can more effectively suppress the formation reaction of by-products at the positive electrode due to electrolyte oxidation at high voltage, can play the role of suppressing the elution of the positive electrode active material, and can also improve the output characteristics by favoring the diffusion of lithium ions at a high current density with the concentration gradient.

Since such a protective layer is formed by a reaction between a specific material in the electrolyte and the oxide-based solid electrolyte, the material formed is determined depending on the type of these materials and the oxide-based solid electrolyte.

Furthermore, a fluorinated nonsolvent in the electrolyte must be essentially included for such a reaction. Otherwise, if an F-containing solvent in an electrolyte solvent is reacted, the lifetime characteristics may be deteriorated due to the depletion of the electrolyte, which is not preferable.

The protective layer formed in this way may contain 70% by weight or more of a F element, specifically 70% by weight to 90% by weight, more specifically 75% by weight to 80% by weight of a F element.

When the protective layer has the fluorine content within the above range, it is possible to exhibit the above-mentioned effect and function as a protective layer.

More specifically, as the Li resulting from the oxide-based solid electrolyte reacts with the F resulting from the fluorinated nonsolvent, it is possible to include a lithium fluoride-based material, more specifically, a lithium fluoride-based polymer having a skeleton of a fluorinated nonsolvent.

The thickness of such a protective layer may be 0.001 µm to 1 µm, and more specifically, it is preferably 0.01 µm or more, 0.05 µm or more, or 0.1 µm or more, and preferably 0.9 µm or less, 0.8 µm or less, 0.7 µm or less, or 0.5 µm or less.

If the thickness is too thin out of the above range, the effect of suppressing the elution of the positive electrode active material and enhancing the lithium ion diffusion due to the formation of the protective layer cannot be obtained, and if the thickness is too thick, the resistance may increase, which is not preferable.

The porosity of the protective layer may be 30 volume% to 70 volume%, specifically 20 volume% to 60 volume%, and more specifically 30 volume% to 40 volume%, based on the total volume of the protective layer.

If the porosity is too large out of the above range, the effect of protecting the positive electrode interfaces is reduced, and if the porosity is too small, the mobility of lithium ions may be reduced, which is not preferable.

When the protective layer is formed, the formation thickness ratio between the buffer layer and the protective layer may be 1/3 to 1/100, specifically 1/3 to 1/50, and more specifically 1/5 to 1/20.

### Electrolyte

On the other hand, as described above, the electrolyte included in the lithium secondary battery according to the present disclosure must react with the oxide-based solid electrolyte to form the protective layer, and therefore includes a fluorinated nonsolvent in addition to a lithium salt and a non-aqueous organic solvent.

Here, the lithium salt is used as a medium for transferring ions in the secondary battery. For example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), or a mixture of two or more thereof. However, in terms of excellent stability, it is preferable to include imide lithium salts, namely, at least one selected from the group consisting of LiFSI (Lithium bis(fluorosulfonyl) imide), LiN(SO₂F)₂), LiBETI(lithium bis(perfluoroethanesulfonyl) imide), LiN(SO₂CF₂CF₃)₂ and LiTFSI (lithium bis(trifluoromethanesulfonyl) imide), LiN(SO₂CF₃)₂).

In addition to these, lithium salts commonly used in electrolytes of lithium secondary batteries can be used without limitation.

The concentration of the lithium salt can be appropriately changed within a generally usable range, but the lithium salt may be included in the electrolyte at a concentration of 0.5 M to 3 M, specifically at a concentration of 1 M to 2.5 M, and more specifically, at a concentration of 1 M to 2 M, in the electrolyte in order to obtain an optimal effect of forming a film for preventing corrosion on the electrode surface. When the concentration of the lithium salt satisfies the above range, the effect of improving cycle characteristics during high-temperature storage of the lithium secondary battery is sufficient, and the viscosity of the electrolyte is appropriate, thereby capable of improving electrolyte impregnation.

The non-aqueous organic solvent is not limited as long as it can minimize decomposition due to an oxidation reaction or the like in the voltage range of the charge/discharge process of the lithium secondary battery, and can exhibit its properties together with a material. For example, a carbonate-based organic solvent, an ether-based organic solvent, an ester-based organic solvent, and the like may be used alone or in mixture of two or more thereof, and specifically, in consideration of the stability of the fluorinated nonsolvent, an ether-based organic solvent may be used. In this case, the ether-based organic solvent may be included in an amount of about 50 volume% or more, specifically 60 volume%, 70 volume%, or 80 volume% or more, and 100 volume% or less, or 90 volume% or less, based on the total non-aqueous organic solvent.

Further, the non-aqueous organic solvent may be included in an amount of 20% by weight to 70% by weight based on the total weight of the electrolyte.

The carbonate-based organic solvent among the organic solvents may include at least one selected from the group consisting of a cyclic carbonate-based organic solvent and a linear carbonate-based organic solvent. Specifically, the cyclic carbonate-based organic solvent may include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC). Specifically, it may include a mixed solvent of ethylene carbonate having a high dielectric constant and propylene carbonate having a relatively low melting point compared to the ethylene carbonate.

Further, the linear carbonate-based organic solvent is a solvent having low viscosity and low dielectric constant, and may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and, more specifically, it may include dimethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound ha s a high dielectric constant as a highly viscous organic solvent and well dissociates the lithium salt in the electrolyte, the cyclic carbonate-based compound may be preferably used. When the cyclic carbonate-based compound is mixed with the low viscosity, a low dielectric constant linear carbonate-based compound such as dimethyl carbonate and diethyl carbonate and a linear ester-based compound, in an appropriate ratio, an electrolyte having high electrical conductivity may be prepared, which may be more preferably used.

The fluorinated nonsolvent may be a material that reacts with the oxide-based solid electrolyte to form a protective layer, thereby exhibiting effects of reducing the elution of the positive electrode active material, suppressing the generation of interfacial side reactions, and improving lithium ion mobility at high current density. For example, the fluorinated nonsolvent may be at least one selected from the group consisting of TFEE (ethylene glycol bis(1,1,2,2-tetrafluoroethyl) ether), TTE (1,1,2,2-tetrafluoroethyl-2,2,3,3-tetrafluoropropyl ether), DFB (1,2-difluorobenzene), BTFE(bis(2,2,2-trifluoroethyl) ether), OTE (1H,1H,5H-Octafluoropentyl 1,1,2,2-tetrafluoroethyl ether), and 1,1,2,2-tetrafluoroethyl 2,2,2-trifluoroethyl ether, and specifically, it may be TTE.

The fluorinated nonsolvent may be included in an amount of 70% by weight or less, specifically 40% by weight to 70% by weight, based on the total weight of the electrolyte. If the content of the material exceeds 70% by weight, the lithium salt may not be sufficiently dissolved in the electrolyte, which causes precipitation of the lithium salt. This may result in side reactions that reduce the lifetime or resistance characteristics of the lithium secondary battery.

### Positive Electrode

The positive electrode may have a structure including a positive electrode current collector, and a positive electrode active material layer formed on one side or both sides of the positive electrode current collector.

Herein, the positive electrode current collector is not particularly limited so long as it has conductivity without causing any chemical change in the battery. For example, as the current collector, stainless steel, aluminum, nickel, titanium, fired carbon, or aluminum or stainless steel of which surface is treated with one of carbon, nickel, titanium, silver, or the like may be used.

The positive electrode current collector may have a thickness of 3µm to 500µm, and may have fine protrusions and depressions formed on a surface thereof to enhance adherence of a positive electrode active material layer. For example, the positive electrode current collector may be used in various forms such as a film, a sheet, a foil, a net, a porous body, a foaming body, and a non-woven fabric structure.

The positive electrode active material layer may include a positive electrode active material, and optionally, a conductive material, a binder, and other material.

The positive electrode active material is not limited as long as it is a compound capable of reversible intercalation and deintercalation of lithium, wherein the positive electrode active material may specifically include a lithium iron phosphate represented by the following Formula 2 or a lithium transition metal oxide represented by the following Formula 3.

[Formula 2] Li₁₊ₐFe_{1-y}M_{y}(PO_{4-b})X_{b}

wherein, in Formula 2, M is at least one selected form the group consisting of Al, Mg and Ti, -0.5≤a≤0.5, 0≤y≤0.5, and 0≤b≤0.1,

   [Formula 3] Li_{1+a'}Ni_{1-y'-z'-s}Co_{y'}Mn_{z'}M'ₛO_{2-b'}X_{b'}
wherein, in Formula 3, M' is at least one selected form the group consisting of Al, Fe, V, Cr, Ti, Ta, Mg and Mo, -0.5≤a'≤0.5, 0<y'<1, 0<z'<1, 0≤s<0.2, and 0≤b'≤0.1,
wherein, in Formulas 2 and 3, X is at least one selected form the group consisting of F, S and N.

The lithium iron phosphate or the lithium transition metal oxide may be included in an amount of 80% by weight or more, specifically 90% by weight to 100% by weight, based on the total weight of the positive electrode active material.

In addition, the positive electrode active material is a lithium metal oxide, which may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., Li₁₊ₓ₁Ni_{1-y1}Mn_{y1}O₂(where, - 0.5≤x1≤0.5, 0<y1<1), Li₁₊ₓ₂ Mn_{2-z2}Ni_{z2}O₄ (where, -0.5 ≤ x2 ≤ 0.5, 0 < z2 < 2), etc.), lithium-nickel-cobalt-based oxide (e.g., Li₁₊ₓ₃Ni_{1-Y1}Co_{Y1}O₂(where, -0.5 ≤ x3 ≤ 0.5, 0<Y1<1), etc.), lithium-manganese-cobalt-based oxide (e.g., Li₁₊ₓ₄Co_{1-Y2}Mn_{Y2}O₂ (where, -0.5 ≤ x4 ≤ 0.5, 0<Y2<1), Li₁₊ₓ₅Mn_{2-Z1}Co_{Z1}O₄ (where, -0.5 ≤ x5 ≤ 0.5, 0 < Z1 < 2), etc.), lithium-nickel-manganese-cobalt-based oxide (e.g., Li₁₊ₐ₂(Niₚ₁Co_{q1}Mnᵣ₁)O₄ (where, -0.5 ≤ a2 ≤ 0.5, 0 < p1 <2, 0 < q1 <2, 0<r1 <2, p1+q1+r1=2), etc.), and the like, and any one thereof or a mixture of two or more thereof may be included.

The positive electrode active material may be included in an amount of 60 to 98% by weight, preferably 80 to 98% by weight, and more preferably 90 to 98% by weight, based on the total weight of the positive electrode active material layer.

The conductive material is a component for further improving the conductivity of the positive electrode active material. Such a conductive material is not particularly limited as long as it has conductivity without causing any chemical change in the battery, and, for example, carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used.

The conductive material may be included in an amount of 0.1 to 20% by weight, specifically 0.5 to 10% by weight, and more specifically 0.5 to 5% by weight, based on the total weight of the positive electrode active material layer.

The binder is a component that assists in the bonding between the conductive material, the positive electrode active material and the positive electrode current collector. Examples of the binder may include polyvinylidene fluoride (PVDF), polyvinyl alcohol, carboxymethylcellulose(CMC), starch, hydroxypropyl cellulose, regenerated cellulose, polyvinylpyrrolidone, polytetrafluoroethylene, polyethylene, polypropylene, ethylene-propylene-diene monomer, sulfonated ethylene-propylene-diene monomer, styrene-butadiene rubber, fluororubber, various copolymers thereof, or the like.

Typically, the binder may be included in an amount of 0.5 to 20% by weight, specifically 0.5 to 10% by weight, and more specifically 0.5 to 5% by weight based on the total weight of the positive electrode active material layer.

In addition, the other materials may further include, for example, a filler and the like as a component for inhibiting the expansion. The filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

### Negative Electrode

A negative electrode may have a structure which includes negative electrode current collector, and a negative electrode active material layer formed on one side or both sides of the negative electrode current collector.

Here, the negative electrode current collector is not particularly limited as long as it has high conductivity without causing any chemical change in the battery. Examples of the negative electrode current collector may include copper, stainless steel, aluminum, nickel, titanium, fired carbon, a copper or stainless steel of which surface is treated with carbon, nickel, silver, or the like, an aluminum-cadmium alloy, or the like.

The negative electrode current collector may typically have a thickness of 3µm to 500µm. Similarly to the positive electrode current collector, the negative electrode current collector may have fine protrusions and depressions formed on the surface thereof to enhance the bonding force of the negative electrode active material. For example, the negative electrode current collector may be used in various forms such as a film, a sheet, a foil, a net, a porous body, a foaming body, and a nonwoven fabric structure.

The negative electrode active material layer may include a negative electrode active material, and optionally, a conductive material, a binder, and other materials.

The negative electrode active material used may be a compound capable of reversible intercalation and deintercalation of lithium, and examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiO_{β} (0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. However, specifically, the negative electrode may include lithium metal as the negative electrode active material, and more specifically, may be composed only of lithium metal.

Alternatively, the negative electrode may be composed only of lithium metal without the negative electrode current collector.

However, a structure including a separate current collector in addition to the lithium metal used as the negative electrode active material layer is more preferable in terms of stability and structure.

The negative electrode including the lithium metal as the negative electrode active material may be formed by a method of physically bonding, rolling, or vapor-depositing on the negative electrode current collector. As the vapor deposition method, an electrical vapor deposition method or a chemical vapor deposition method of the metal may be used.

Here, the lithium metal may include an alloy that partially includes one metal selected from the group consisting of nickel (Ni), tin (Sn), copper (Cu), and indium (In) in addition to lithium (Li).

Hereinafter, the lithium secondary battery according to certain embodiments of the present disclosure will be described with reference to Examples in order to demonstrate that it exhibits improved effects.

### <Example 1>

A buffer layer (thickness: 3 µm) was formed on one side of a polyolefin substrate (thickness: 15 µm) to manufacture a separator laminator.

Here, Li_{1.3}Al_{0.3}Ti_{1.7}(PO₄)₃ : acrylic copolymer (CSB130, Toyo Ink Co.) was mixed in a weight ratio of 95:5 and dispersed in acetone to prepare a slurry, and the prepared slurry was coated on one side of the polyolefin material substrate and dried to prepare the buffer layer.

The porosity of the buffer layer was 48.5%, and the total ion conductivity of the polyolefin substrate and the buffer layer was 0.81 mS/cm.

A 15 micrometer thick aluminum(Al) metal thin film was prepared as a positive electrode current collector. LiFePO₄/C as a positive electrode active material, carbon black as a conductive material, and PVDF as a binder were added in a weight ratio of 96:1:3 to an NMP solvent, dispersed to prepare a positive electrode slurry. The prepared positive electrode slurry was coated on one side of the aluminum metal thin film to a thickness of 60 micrometers, followed by drying and rolling to prepare a positive electrode.

The separator laminate was interposed between the positive electrode and lithium foil (thickness: 45 µm) as a negative electrode, but interposed so that the buffer layer faced the positive electrode to prepare an electrode assembly. The prepared electrode assembly was incorporated into a case together with an electrolyte obtained by dissolving LiFSI and ethylene glycol dimethyl ether solvent at a 1M:1.2M ratio and adding TTE thereto so as to be 70% of the total weight of the electrolyte, thereby manufacturing a coin half-cell.

### <Example 2>

A coin half-cell was manufactured in the same manner as in Example 1, except that an electrolyte, in which LiFSI was dissolved in FEC: DMC: OTE solvent in a ratio of 16:64:20 (v/v) so as to be 2.5 M (molality), was used as the electrolyte composition in Example 1.

### <Comparative Example 1>

A coin half-cell was manufactured in the same manner as in Example 1, except that a polyolefin material substrate (thickness: 16 micrometers) was prepared and used instead of the separator laminate in Example 1.

### <Comparative Example 2>

A coin half-cell was manufactured in the same manner as in Example 1, except that the separator laminate prepared in Example 1 was interposed so that the buffer layer faced the negative electrode, thereby manufacturing an electrode assembly.

### <Comparative Example 3>

A coin half-cell was manufactured in the same manner as in Example 2, except that an electrolyte, in which 1 wt% of additive VC was added to a solvent EC: DEC= 1:1 (v/v) having 1M LiPF₆ dissolved therein, was used as the electrolyte composition in Example 2.

### <Comparative Example 4>

A coin half-cell was manufactured in the same manner as in Example 2, except that an electrolyte, in which 1 wt% of additive VC and 10 wt% of FEC were added to a solvent EC: DEC= 1:1 (v/v) having 1M LiPF₆ dissolved therein, was used as the electrolyte composition in Example 2.

### <Experimental Example 1>

The coin half-cells manufactured in Examples 1 and 2 were aged at 25°C for 12 hours, charged with a constant current of 0.1C at the same temperature until voltage reached 3.7 V, and then fully discharged with a constant current of 0.1C at 25°C to perform activation for 2 cycles, and then charged with a constant current of 0.5C at 25°C until voltage reached 3.7 V, and discharged at 0.5C. The entire process was repeated until 70% of its initial discharge capacity was reached.

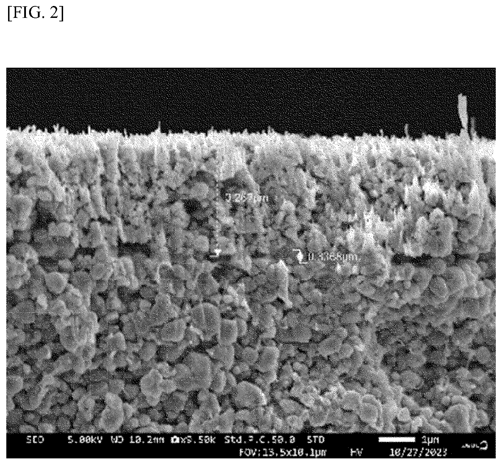

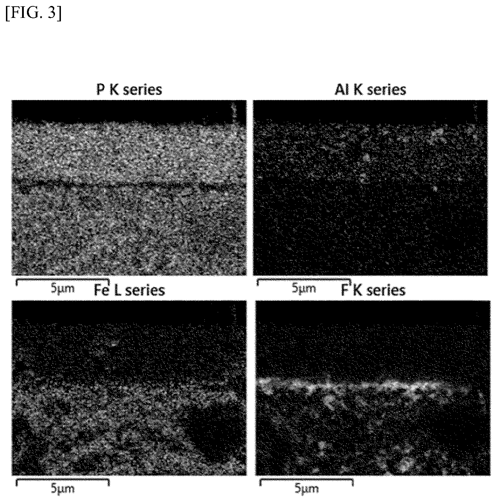

Further, after the cycle of Example 1, a cross-sectional SEM photograph of the positive electrode was taken, and the results were shown in FIG. 2. In addition, EDS analysis was performed on the cross section of the positive electrode to analyze the surface elements, and the results were shown in FIG. 3 below.

Referring to FIG. 2, it can be confirmed that the surface characteristics of the positive electrode are changed after the cycle of the coin half-cell according to the present disclosure.

Specifically, the positive electrode-protective film-buffer layer is formed from the lower layer of FIG. 2. That is, it can be confirmed that the buffer layer (upper layer in the cross section) and the protective film (black mark between the protective film of the upper layer and the positive electrode of the lower layer) are formed in a thickness of 1 µm or less in the positive electrode according to Examples. Referring to FIG. 3, it can be confirmed that the content of the F element in the protective film portion is very high.

Therefore, it can be confirmed that according to the present disclosure, the formation of by-products at the positive electrode interfaces is suppressed.

### <Experimental Example 2>

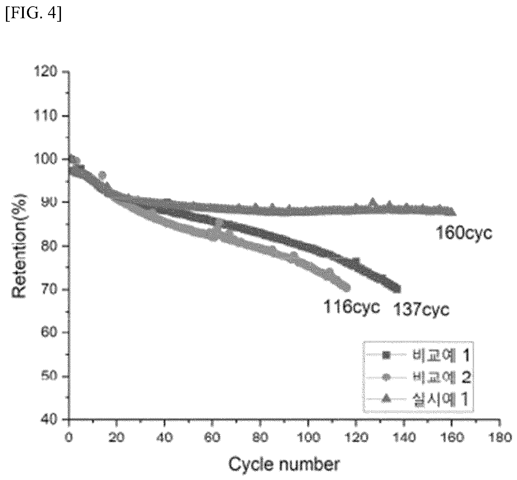

Using the coin half-cells of Example 1 and Comparative Examples 1 and 2, the same cycles as in Experimental Example 1 were repeated until 70% of its initial discharge capacity was reached, and the lifetime retention of the n^{th} discharge capacity relative to the 1^{st} discharge capacity was measured, and the results were shown in FIG. 4 below.

Referring to FIG. 4, it can be confirmed that according to the present disclosure, it exhibits excellent lifetime characteristics.

### <Experimental Example 3>

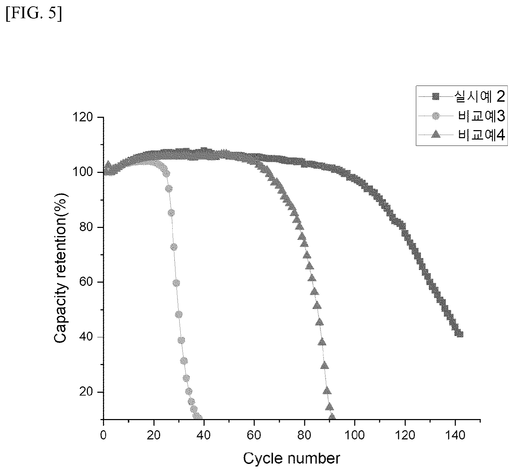

Using the coin half-cells of Example 2, and Comparative Examples 3 and 4, the same cycles as in Experimental Example 1 were repeated until 70% of its initial discharge capacity was reached, and the lifetime retention of the n^{th} discharge capacity relative to the 1^{st} discharge capacity was measured, and the results were shown in FIG. 5 below.

Referring to FIG. 5, it can be confirmed that according to the present disclosure, it exhibits excellent lifetime characteristics.

It is to be understood that those skilled in the art to which the present disclosure pertains may carry out various applications and modifications based on the descriptions above within the scope of the present disclosure.

### [INDUSTRIAL APPLICABILITY]

In the lithium secondary battery according to the present disclosure, a buffer layer including an oxide-based solid electrolyte, and a protective layer including a reactive material formed by a reaction of the oxide-based solid electrolyte with the fluorinated nonsolvent are formed between the positive electrode and the separator, thereby capable of improving the physical properties of the separator, suppressing formation of by-products at the positive electrode interfaces, preventing an increase in resistance and overvoltage, and continuously realizing a capacity and improving a lifetime.

## Claims

1. A lithium secondary battery comprising:
an electrode assembly including a positive electrode, a negative electrode, and a separator, and
an electrolyte including a lithium salt, a non-aqueous organic solvent, and a fluorinated nonsolvent.
wherein the positive electrode and the negative electrode face each other with the separator between them, and
wherein a buffer layer including an oxide-based solid electrolyte and a protective layer including a reactive material formed by a reaction of the oxide-based solid electrolyte with the fluorinated nonsolvent are formed between the positive electrode and the separator.

2. The lithium secondary battery according to claim 1,
wherein the oxide-based solid electrolyte comprises LATP represented by the following Formula 1:
[Formula 1] Li₁₊ₓAlₓTi₂₋ₓ(PO₄)₃
wherein, in Formula 1, 0 < x <0.5.

3. The lithium secondary battery according to claim 2,
wherein the oxide-based solid electrolyte comprises Li_{1.3}Al_{0.3}Ti_{1.7}(PO₄)₃ (LATP).

4. The lithium secondary battery according to claim 1,
wherein the buffer layer further comprises a binder.

5. The lithium secondary battery according to claim 1,
wherein a thickness of the buffer layer is 0.1µm to 10µm.

6. The lithium secondary battery according to claim 1,
wherein an ionic conductivity of the separator and the buffer layer is 0.5 mS/cm to 5 mS/cm.

7. The lithium secondary battery according to claim 1,
wherein the protective layer is formed between the buffer layer and the positive electrode.

8. The lithium secondary battery according to claim 1,
wherein the protective layer has a gradient in which the concentration of the material resulting from the oxide-based solid electrolyte in the reactive material decreases as it goes from the buffer layer to the positive electrode on the basis of the thickness direction.

9. The lithium secondary battery according to claim 1,
wherein a thickness of the protective layer is 0.01µm to 1µm.

10. The lithium secondary battery according to claim 1,
wherein the protective layer contains 70% by weight to 90% by weight of F element.

11. The lithium secondary battery according to claim 1,
wherein the lithium salt of the electrolyte is at least one imide-based lithium salt selected from the group consisting of LiFSI (Lithium bis(fluorosulfonyl) imide), LiN(SO₂F)₂), LiBETI (lithium bis(perfluoroethanesulfonyl) imide), LiN(SO₂CF₂CF₃)₂ and LiTFSI (lithium bis(trifluoromethanesulfonyl) imide), LiN(SO₂CF₃)₂).

12. The lithium secondary battery according to claim 1,
wherein the fluorinated nonsolvent is at least one selected from the group consisting of TFEE (Ethylene glycol bis(1,1,2,2-tetrafluoroethyl) ether), TTE (1,1,2,2-tetrafluoroethyl-2,2,3,3-tetrafluoropropyl ether), DFB (1,2-difluorobenzene), BTFE (bis(2,2,2-trifluoroethyl) ether), OTE (1H,1H,5H-Octafluoropentyl 1,1,2,2-tetrafluoroethyl ether), and 1,1,2,2-tetrafluoroethyl 2,2,2-trifluoroethyl ether.

13. The lithium secondary battery according to claim 1,
wherein the non-aqueous organic solvent contains an ether-based organic solvent in an amount of 50 volume% or more based on the total volume of the non-aqueous organic solvent.

14. The lithium secondary battery according to claim 1,
wherein the positive electrode comprises a lithium iron phosphate represented by the following Formula 2 or a lithium transition metal oxide represented by the following Formula 3 as a positive electrode active material.
[Formula 2] Li₁₊ₐFe_{1-y}M_{y}(PO_{4-b})X_{b}
wherein, in Formula 2, M is at least one selected form the group consisting of Al, Mg and Ti, -0.5≤a≤0.5, 0≤y≤0.5, and 0≤b≤0.1,
[Formula 3] Li_{1+a'}Ni_{1-y'-z'-s}Co_{y'}Mn_{z'}M'ₛO_{2-b'}X_{b'}
wherein, in Formula 3, M' is at least one selected form the group consisting of Al, Fe, V, Cr, Ti, Ta, Mg and Mo, -0.5≤a'≤0.5, 0<y'<1, 0<z'<1, 0≤s<0.2, and 0≤b'≤0.1,
wherein, in Formulas 2 and 3, X is at least one selected form the group consisting of F, S and N.

15. The lithium secondary battery according to claim 1,
wherein the negative electrode comprises a lithium metal as a negative electrode active material.
